# FASCICULE DE BREVET EUROPEEN

(11) **EP 1 426 242 B1**
(45) Date de publication et mention de la délivrance du brevet: **10.02.2010**
(21) Numéro de dépôt: 03292994.5
(22) Date de dépôt: 01.12.2003
(51) Int. Cl.: B60R 19/18

(54) **Coque de poutre de pare-chocs comportant une doublure de coque et un renfort**
Schalenförmiger Stossfängerträger mit einer Zweitschale und einem Verstärkungselement
Bumper beam with twin shells and a stiffening element

(30) Priorité: 29.11.2002 FR 0215100
(43) Date de publication de la demande: 09.06.2004
(73) Titulaire: COMPAGNIE PLASTIC OMNIUM, 69007 Lyon (FR)
(72) Inventeur: Roussel, Thierry, 52500 Fayl La Foret (FR); Malteste, Stéphane, 01800 Meximieux (FR); Pierrot, Frédéric, 01150 Lagnieu (FR)
(74) Mandataire: Remy, Vincent Noel Paul

(56) Documents cités:
- EP-A- 0 652 138
- FR-A- 2 711 596

## Description

La présente invention concerne un ensemble d'un renfort et d'une coque de poutre de véhicule automobile ainsi qu'une poutre de véhicule automobile.

On sait que les pare-chocs de véhicules automobiles comportent des poutres transversales dont la fonction est d'absorber la majeure partie de l'énergie des chocs.

Un test répandu, notamment aux Etats-Unis, pour vérifier la résistance d'un pare-chocs est connu sous le nom de "pole test" ou choc poteau. Ce test consiste à impacter l'arrière du véhicule dans son axe médian à une vitesse de 8 km/h contre un poteau fixe de 7 pouces de diamètre (soit environ 178 mm). L'essai est considéré comme satisfaisant si le montant des réparations lié à la remise en état du véhicule après un tel essai est inférieur à un certain seuil.

Pour limiter les coûts de réparation lors d'un tel choc, il est impératif de générer un minimum de dégâts sur l'arrière du véhicule, donc de limiter la pénétration du poteau dans la face arrière du véhicule lors de l'impact, par exemple en mettant en place une traverse suffisamment résistante pour diminuer la pénétration des impacteurs en cas de choc.

Par ailleurs, outre le choc poteau, le choc Danner exige des véhicules automobiles d'anticiper considérablement le transfert des efforts sur des absorbeurs d'énergie lors d'un choc. Pour absorber cette énergie, on peut monter des prolonges entre les longerons du véhicule et la poutre de pare-chocs.

Les traverses ou prolonges métalliques ont pendant longtemps été utilisées dans les pare-chocs en raison de leur bonne rigidité. De telles pièces présentent néanmoins l'inconvénient d'être relativement lourdes. En outre, elles ne s'adaptent pas facilement à une configuration géométrique particulière qui peut être imposée par le véhicule, nécessitant parfois l'ajout de pièces supplémentaires couramment appelées absorbeurs.

C'est pourquoi on a tenté de remplacer les poutres ou prolonges métalliques par des pièces en matière plastique qui répondent plus favorablement à ces deux critères de poids et de géométrie.

Néanmoins, du fait du peu de rigidité inhérente aux matières utilisées, ces pièces en matière plastique doivent présenter une structure complexe, notamment des nervures, et la matière utilisée doit être mélangée à des fibres de renfort qui augmentent son coût et complexifient la fabrication des pièces, ce qui tend à atténuer, sans pour autant les éliminer, les avantages procurés par le recours à de la matière plastique.

Le document US 5 139 297 décrit un ensemble selon le préambule de la revendication 1.

La présente invention vise à proposer une solution permettant de bénéficier de l'aptitude des poutres en matière plastique à s'adapter facilement à des formes spécifiques ainsi que de la rigidité apportée par un ou plusieurs renforts métalliques, sans en présenter les inconvénients.

A cet effet, l'invention a pour objet un ensemble d'un renfort et d'une coque de poutre de véhicule automobile selon la revendication 1.

Grâce à l'invention, le logement prévu dans la coque pour recevoir le renfort métallique peut permettre d'éviter d'avoir à fixer ce renfort à la coque. On évite ainsi les fragilisations engendrées par les fixations du renfort sur la coque. De même, on évite les manipulations et on facilite le recyclage en fin de vie de la poutre constituée par la coque et le renfort.

Par ailleurs, on obtient un corps creux qui constitue en soi une structure rigidifiante pour la coque, ce qui ajoute à l'accroissement de rigidité résultant de la présence du renfort dans la coque.

De manière préférée, le logement est dimensionné pour épouser la forme extérieure du renfort dans certaines zones, par exemple en partie centrale de la coque.

On peut également prévoir de ménager un dégagement autour du renfort, notamment dans la direction longitudinale (ou de déplacement) du véhicule, de manière à permettre à la coque de commencer à se déformer autour du renfort en cas de choc, avant que le renfort ne soit sollicité.

De même, un jeu dans la direction longitudinale peut permettre au renfort de travailler en flexion sans solliciter la coque, si les appuis subis par la poutre lors du choc ne se trouvent pas au droit des points de fixation de la poutre sur le châssis du véhicule.

Une ensemble selon l'invention peut en outre comporter l'une ou plusieurs des caractéristiques suivantes :
- le logement est délimité par une partie de la coque présentant une section ouverte ;
- la coque est dimensionnée pour épouser la forme intérieure de la peau de pare-chocs derrière laquelle la poutre doit prendre place ;
- elle comporte plusieurs logements pour recevoir plusieurs renforts ;
- le logement comporte des moyens d'absorption de chocs, par exemple des nids d'abeilles locaux ;
- réalisée en matière thermoplastique, notamment en polypropylène ;
- la doublure de coque enferme le renfort ; et
- le logement consiste en un canal.

Selon l'invention, la coque comporte au moins deux moyens de fixation à la structure du véhicule et dans laquelle le logement s'étend longitudinalement d'un moyen de fixation à l'autre.

Grâce à une telle coque, le renfort reçu dans le logement est par exemple une traverse métallique, sous forme de tube à section rectangulaire. Ce renfort permet alors de rigidifier considérablement la poutre et de diminuer la pénétration d'un poteau lors d'un impact tel que celui du « pôle test ».

Selon un autre mode de réalisation de l'invention, un second logement est agencé au droit d'un longeron du véhicule automobile lorsque la coque de la poutre est montée sur ce véhicule.

Une telle coque peut ainsi recevoir deux renforts au droit de chaque longeron, de façon que ces renforts absorbent l'énergie de chocs tels que le choc Danner.

L'ensemble selon l'invention peut en outre comporter l'une ou plusieurs des caractéristiques suivantes :
- un second renfort qui est une prolonge de longeron tubulaire ayant une génératrice sensiblement parallèle à la direction longitudinale du véhicule, notamment une prolonge en forme de tube biseauté ;
- le renfort assure une fonction de soutien vertical de la poutre ; et
- la prolonge reçue comporte une pièce support, notamment un support d'un anneau d'arrimage/remorquage.

La coque en matière plastique peut être obtenue par moulage ou par extrusion. Elle peut aussi être surmoulée sur le ou les renforts reçus dans son logement.

La présente invention a également pour objet une poutre de véhicule automobile destinée à prendre place derrière une peau de pare-chocs, caractérisée en ce qu'elle comprend un ensemble tel que décrit ci-dessus. Cette poutre peut comprendre plusieurs renforts métalliques.

L'invention sera mieux comprise à la lecture de la description qui va suivre, donnée uniquement à titre d'exemple et faite en se référant aux dessins annexés dans lesquels :
- la figure 1 est une vue en perspective éclatée d'une poutre de pare-chocs selon un premier mode de réalisation de l'invention ;
- la figure 2 est une section transversale selon II-II de la poutre de la figure 1 à l'état assemblé.
- la figure 3 est une vue en perspective éclatée d'une poutre de pare-chocs selon un deuxième mode de réalisation de l'invention ; et
- la figure 4 est une vue de l'arrière d'une partie de la poutre de la figure 3.

Dans l'exemple décrit, la poutre comprend une coque 1 à section en "W", réalisée en polypropylène chargé de fibres de verre longues (supérieures à 1 mm). Cette coque est obtenue par moulage par injection dans des conditions usuelles.

Du fait de sa section en W, la coque présente, de l'extérieur vers l'intérieur, deux bords longitudinaux externes supérieur 3 et inférieur 5 parallèles entre eux, reliés à deux bords longitudinaux internes supérieur 7 et inférieur 9 parallèles aux précédents, prolongés par deux parois convergentes 11 et 13 réunies par un fond 15.

Les bords longitudinaux internes 7 et 9, les parois convergentes 11 et 13 et le fond 15 constituent une partie ouverte en U de la section de coque et délimitent un logement allongé 17 pour recevoir un renfort sous forme de traverse constituée ici par un tube métallique 19 à section rectangulaire.

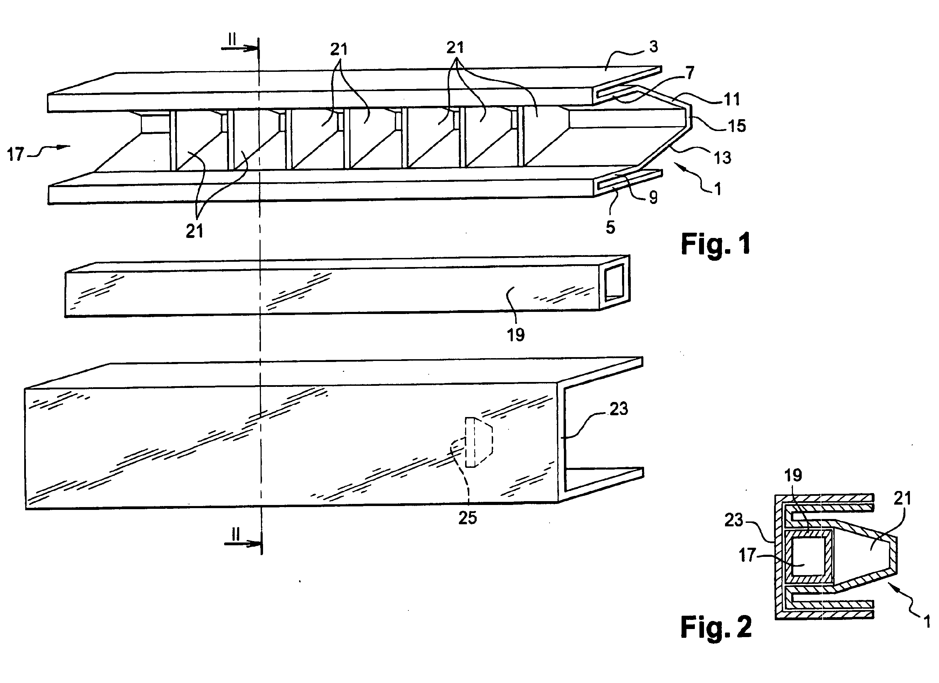

Comme on le voit sur la section de la figure 2, le tube 19 prend place dans le logement 17 en s'appuyant sur des voiles transversaux 21 formés entre les parois convergentes 11, 13 et le fond 15. Ces voiles renforcent la coque et préviennent notamment l'ouverture de sa section. En outre, ils jouent un rôle d'absorbeurs locaux et peuvent à cet effet être répartis de manière irrégulière le long de la coque, en étant par exemple plus nombreux aux voisinages des deux longerons (non représentés) supportant la poutre.

La coque 17 et le tube 19 forment un ensemble compact, comme on le voit sur la figure 2, qui vient s'emboîter dans une doublure de coque 23 à section en U.

Ainsi, la doublure de coque ferme la section ouverte du logement et forme, avec la coque, un corps creux allongé délimitant un logement enfermant le renfort métallique.

De cette manière, la poutre possède une rigidité provenant d'une part de la présence du tube constituant un renfort métallique, d'autre part du corps creux formé par la coque et la doublure de coque.

S'ajoute à ces deux facteurs la forme des bords longitudinaux externes 3, 5 et internes 7, 9, doublés par ceux 25, 27 de la doublure de coque, qui sont solidarisés à la coque par des moyens appropriés.

L'ajustement en Z, c'est-à-dire verticalement, entre les bords longitudinaux précités et le tube métallique présente en outre l'avantage supplémentaire que le tube assure, en plus de sa fonction de rigidification pour les chocs, une fonction de soutien vertical (en Z) de la poutre, et donc du pare-chocs.

Cette fonction est particulièrement utile pour les pare-chocs arrière qui servent de seuil de chargement, mais aussi pour des pare-chocs avant susceptibles d'être sollicités verticalement par des utilisateurs.

Dans ce cas, il est utile que la coque et/ou la doublure de coque soit dimensionnée pour épouser la forme intérieure de la peau de pare-chocs.

A l'intérieur de la doublure de coque 23, des flancs transversaux 25 (dont un seul est représenté ici) assurent le positionnement longitudinal du tube métallique.

Grâce au fait qu'il est intégralement maintenu à l'intérieur de la coque par le seul emboîtement de cette dernière dans la doublure de coque, le tube métallique 19 n'est fixé en aucun point ni à la coque, ni à la doublure de coque.

L'intégrité de la coque est ainsi respectée et aucune zone de fragilité de cette dernière n'est créée.

De plus, la mise en place du tube à l'intérieur de la coque est une manipulation simple qui n'est suivie d'aucune opération spécifique de fixation. L'ajout du renfort est donc une mesure peut coûteuse en termes de process.

Enfin, on comprend que le tube métallique peut très facilement être séparé de la coque et de la doublure de coque lorsque, en fin de vie de la poutre, les matériaux qui la constituent doivent être recyclés.

On notera enfin que, bien que cela ne soit pas représenté sur les figures 1 et 2, il peut être utile de ménager un jeu entre le tube métallique et la coque dans la direction longitudinale (direction X) du véhicule, afin de permettre au tube de fléchir sans trop déformer la coque en cas de chocs. L'ajustement de ce jeu fonctionnel est laissé à l'appréciation de l'homme du métier, en fonction des matériaux utilisés et des dimensions et formes des différents composants de la poutre.

Des exemples de matériaux utilisables sont :
- pour la coque et la doublure de coque : du polypropylène ou du polycarbonate-polybutyrènetéréphtalate, éventuellement mélangé à des fibres de verre ou à un renfort constitué d'un tissu surmoulé tel que le Twintex de la société Vetrotex, qu'elles soient réalisées par injection, par compression ou par extrusion-pressage.
- pour le renfort : on peut utiliser une structure métallique, par exemple en aluminium ou une structure composite.

Dans une variante (non représentée), le renfort métallique se limite à une partie seulement de la longueur totale de la poutre, en un emplacement de celle-ci particulièrement sollicité en cas de choc, par exemple en son milieu.

Une autre variante (non représentée) pouvant s'avérer intéressante, notamment pour limiter le poids de la poutre, consiste à prévoir plusieurs logements dans la coque pour plusieurs renforts disposés dans la poutre. Par exemple, un renfort relativement court peut être placé en face de chaque longeron.

On notera en outre que, si l'exemple illustré correspond à un emboîtement de la coque 1 dans la doublure de coque 23, il pourrait également être prévu que se soit la doublure de coque 23 qui s'emboîte dans la coque 1.

Selon un mode de réalisation non représenté, le tube 19 est remplacé par une tôle ondulée dont la génératrice est horizontale et parallèle à la direction de roulement du véhicule.

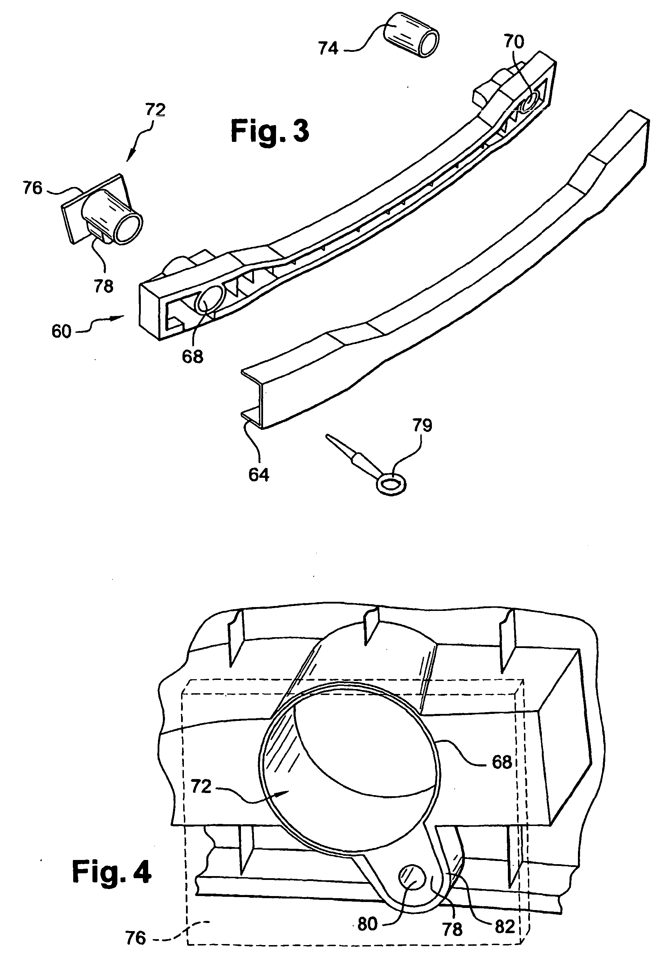

Dans le mode de réalisation de la figure 3, la poutre comprend une coque 60 à section en W du même type que celle du mode de réalisation de la figure 1. La coque 60 s'emboîte avec une doublure de coque 64 à section en U.

A la différence du mode de réalisation de la figure 1, la coque 60 de la figure 3 comprend deux orifices 68 et 70 destinés à recevoir deux prolonges 72 et 74 en forme de tube.

Les prolonges 72, 74 peuvent être rapportées par l'avant ou par l'arrière de la coque 60. Elles peuvent être réalisées dans différents matériaux résistants, tels que acier, aluminium, matériau composite ou thermoplastique, etc.

Sur la prolonge 72, on a fixé un support 78 d'un anneau 79 d'arrimage/remorquage. L'anneau 79 est fixé au support 78 de façon classique, par exemple par vissage.

La prolonge 72 est également munie d'une platine 76, destinée à être prise en sandwich entre la poutre et la platine du véhicule lors de la fixation de l'ensemble sur le véhicule. La platine 76 assure une fixation consolidée de la prolonge 72 sur la coque 60, en vue d'une sollicitation plus grande de cette prolonge par l'anneau 79 d'arrimage/remorquage.

Selon un mode de réalisation non représenté, les deux prolonges reçues dans la coque comporte une platine telle que la platine 76. Ou encore, aucune des deux prolonges ne comporte de platine.

Selon un autre mode de réalisation non représenté, les prolonges 72 et 74 ont une extrémité biseautée leur permettant de s'adapter au galbe du pare-chocs.

On peut voir sur la figure 4 que la coque 60 comporte, en plus de l'orifice 68 destiné à recevoir la prolonge 72, un orifice 82 destiné à recevoir le support 78 de l'anneau 79 d'arrimage/remorquage.

Parmi les avantages de l'invention, on notera que grâce à la résistance du matériau de la prolonge 72, le support 78 de l'anneau d'arrimage/remorquage 79 bénéficie d'un bon ancrage pour être fixé à la poutre de façon suffisamment solide pour assurer sa fonction.

On notera également que les prolonges 72 et 74, une fois rapportées sur la coque 60 de la poutre, permettent de renforcer, grâce à leur matériau rigide, la poutre afin de satisfaire aux exigences des cahiers des charges de cette poutre.

Par ailleurs, ce renfort apporté par les prolonges 72 et 74, ajouté au renfort central apporté par le tube 62, permet d'obtenir une poutre en matière plastique rigide dont la fixation des renforts 60, 72, 74, à la coque 60, ne fragilise pas l'ensemble de la poutre.

Selon l'invention, la coque 60 comporte, en plus des renforts 72 et 74, un autre renfort sous forme de traverse, tel que le tube 19 de la figure 1.

D'autres variantes pourraient être déduites des exemples décrits ci-dessus, par des modifications de structures ou de fonctions ne sortant pas du cadre de l'invention.

## Revendications

1. Ensemble d'un renfort et d'une coque de poutre de véhicule automobile, la poutre étant destinée à prendre place derrière une peau de pare-chocs, la coque de poutre comportant un logement (17) pour recevoir le renfort (19) en son intérieur, ce renfort pouvant être par exemple un renfort métallique notamment en aluminium ou un renfort en matériau composite incorporant un métal, et la coque comportant au moins deux moyens de fixation à la structure du véhicule et le logement (17) s'étendant longitudinalement d'un moyen de fixation à l'autre, la coque comportant une doublure de coque (23, 64) qui vient s'emboîter avec la coque en formant un corps creux, **caractérisé en ce que** le corps creux constituant en soi une structure rigidifiante pour la coque et délimite le logement (17) recevant le renfort (19), le renfort (19) étant sous forme de traverse.

2. Ensemble selon la revendication 1, dans lequel le logement est dimensionné pour épouser la forme extérieure du renfort dans certaines zones, par exemple en partie centrale de la coque.

3. Ensemble selon la revendication 1 ou 2, dans laquelle le logement est délimité par une partie de la que (17) présentant une section ouverte.

4. Ensemble selon l'une quelconque des revendications 1 à 3, dans lequel la coque est dimensionnée pour épouser la forme intérieure de la peau de pare-chocs derrière laquelle la poutre doit prendre place.

5. Ensemble selon l'une quelconque des revendications 1 à 4, dans lequel la coque comporte plusieurs logements pour recevoir plusieurs renforts.

6. Ensemble selon l'une quelconque des revendications 1 à 5, dans lequel le logement comporte des moyens d'absorption de chocs, par exemple des nids d'abeilles locaux.

7. Ensemble selon l'une quelconque des revendications 1 à 6, dans lequel la coque est réalisée en matière thermoplastique, notamment en polypropylène.

8. Ensemble selon l'une quelconque des revendications 1 à 7, dans lequel la doublure de coque (23) enferme le renfort (19).

9. Ensemble selon l'une quelconque des revendications 1 à 8, dans lequel un second logement est agencé au droit d'un longeron du véhicule automobile lorsque la coque de la poutre est montée sur ce véhicule.

10. Ensemble selon l'une quelconque des revendications 1 à 9, dans lequel le second logement consiste en un canal (68, 70).

11. Ensemble selon l'une quelconque des revendications 9 à 10 comportant un second renfort, le second renfort étant une prolonge (72, 74) de longeron tubulaire ayant une génératrice sensiblement parallèle à la direction longitudinale du véhicule, notamment une prolonge en forme de tube biseauté.

12. Ensemble selon la revendication 11, dans lequel la prolonge (72) reçue comporte une pièce support (78), notamment un support d'un anneau (79) d'arrimage/remorquage.

13. Ensemble selon l'une quelconque des revendications 1 à 12, dans lequel le renfort assure une fonction de soutien vertical de la poutre.

14. Poutre de véhicule automobile destinée à prendre place derrière une peau de pare-chocs, **caractérisée en ce qu'**elle comprend un ensemble selon l'une quelconque des revendications 1 à 13.

## Claims

1. An assembly comprising a motor vehicle beam shell and reinforcement, the beam being for placing behind a bumper skin, the beam shell including a recess (17) for receiving the reinforcement (19) therein, the reinforcement possibly being, for example, metal reinforcement, in particular made of aluminum, or reinforcement made of composite material incorporating a metal, the shell including at least two fastener means for fastening to the structure of the vehicle and the recess (17) extending longitudinally from one fastener means to the other, the shell including a shell liner (23, 64) that engages with the shell to form a hollow body, the assembly being **characterized in that** the hollow body in itself constitutes a stiffener structure for the shell and defines the recess (17) receiving the reinforcement (19), the reinforcement (19) being in the form of a cross-member.

2. An assembly according to claim 1, wherein the recess is dimensioned to match the outside shape of the reinforcement in certain zones, e.g. in a central portion of the shell.

3. An assembly according to claim 1 or claim 2, wherein the recess is defined by a shell portion (17) presenting an open section.

4. An assembly according to any one of claims 1 to 3, wherein the shell is dimensioned to match the inside shape of the bumper skin behind which the beam is to be placed.

5. An assembly according to any one of claims 1 to 4, wherein the shell includes a plurality of recesses for receiving a plurality of reinforcements.

6. An assembly according to any one of claims 1 to 5, wherein the recess includes impact absorber means, e.g. local honeycombs.

7. An assembly according to any one of claims 1 to 6, wherein the shell is made of thermoplastic material, in particular of polypropylene.

8. An assembly according to any one of claims 1 to 7, wherein the shell liner (23) encloses the reinforcement (19).

9. An assembly according to any one of claims 1 to 8, wherein a second recess is arranged in register with a side rail of the motor vehicle when the beam shell is mounted on the vehicle.

10. An assembly according to any one of claims 1 to 9, wherein the second recess is constituted by a channel (68, 70).

11. An assembly according to claim 9 or claim 10, including second reinforcement, the second reinforcement being an extension (72, 74) of the tubular side rail having a generator line substantially parallel to the longitudinal direction of the vehicle, in particular an extension in the form of a chamfered tube.

12. An assembly according to claim 11, wherein the received extension (72) includes a support part (78) in particular a support for a stowing/towing ring (79).

13. An assembly according to any one of claims 1 to 12, wherein the reinforcement provides a vertical support function for the beam.

14. A motor vehicle beam for placing behind a bumper skin, the beam being **characterized in that** it includes an assembly according to any one of claims 1 to 13.

## Patentansprüche

1. Anordnung einer Verstärkung und eines schalenförmigen Trägers eines Kraftfahrzeugs, wobei der Träger hinter der Verkleidung von Stoßfängern angeordnet werden soll, wobei der schalenförmige Träger eine Aufnahme (17) zum Anbringen der Verstärkung (19) in seinem Inneren aufweist, wobei es sich bei dieser Verstärkung beispielsweise um eine Verstärkung aus Metall, insbesondere aus Aluminium, oder um eine Verstärkung aus einem ein Metall enthaltenden Verbundwerkstoff handeln kann, wobei der schalenförmige Träger mindestens zwei Mittel zum Befestigen an der Struktur des Fahrzeugs aufweist und die Aufnahme (17) sich von einem Befestigungsmittel zum anderen in Längsrichtung erstreckt, wobei der schalenförmige Träger eine Schaleninnenverkleidung (23, 64) aufweist, die in den schalenförmigen Träger hineinpassen soll und dabei einen Hohlkörper bildet, **dadurch gekennzeichnet, dass** der Hohlkörper in sich eine verstärkende Struktur für den schalenförmigen Träger bildet und die Aufnahme (17) begrenzt, die die Verstärkung (19) aufnimmt, wobei die Verstärkung (19) die Form einer Traverse aufweist.

2. Anordnung nach Anspruch 1, in der die Aufnahme so dimensioniert ist, dass sie in die äußere Form der Verstärkung in einigen Abschnitten hineinpasst, beispielsweise im Mittenteil des schalenförmigen Trägers.

3. Anordnung nach Anspruch 1 oder 2, in der die Aufnahme durch einen Teil des schalenförmigen Trägers (17) begrenzt wird, der einen offenen Abschnitt darstellt.

4. Anordnung nach einem der Ansprüche 1 bis 3, in der der schalenförmigen Träger so dimensioniert ist, dass er in die innere Form der Stoßfängerverkleidung hineinpasst, hinter der der Träger angeordnet werden soll.

5. Anordnung nach einem der Ansprüche 1 bis 4, in der der schalenförmige Träger mehrere Aufnahmen zum Anbringen mehrerer Verstärkungen aufweist.

6. Anordnung nach einem der Ansprüche 1 bis 5, in der die Aufnahme Aufprall-Absorptionsmittel aufweist, beispielsweise lokale Wabenstrukturen.

7. Anordnung nach einem der Ansprüche 1 bis 6, in der der schalenförmige Träger aus einem thermoplastischen Werkstoff, insbesondere aus Polypropylen, hergestellt wird.

8. Anordnung nach einem der Ansprüche 1 bis 7, in der die Schaleninnenverkleidung (23) die Verstärkung (19) umschließt.

9. Anordnung nach einem der Ansprüche 1 bis 8, in der eine zweite Aufnahme senkrecht zu einem Längsträger des Kraftfahrzeugs angeordnet wird, wenn der schalenförmige Träger am Fahrzeug montiert wird.

10. Anordnung nach einem der Ansprüche 1 bis 9, in der die zweite Aufnahme aus einem Kanal (68, 70) besteht.

11. Anordnung nach einem der Ansprüche 9 bis 10, die eine zweite Verstärkung aufweist, wobei es sich bei der zweiten Verstärkung um eine Verlängerung (72, 74) des rohrförmigen Längsträgers handelt, welche eine zur Längsrichtung des Fahrzeugs im Wesentlichen parallele Mantellinie aufweist.

12. Anordnung nach Anspruch 12, in der die aufgesetzte Verlängerung (72) ein Halteteil (78), insbesondere eine Halterung für eine Abschleppöse (79), aufweist.

13. Anordnung nach einem der Ansprüche 1 bis 12, in der die Verstärkung die Funktion übernimmt, den Träger senkrecht zu halten.

14. Träger eines Kraftfahrzeugs, der zum Einbau hinter der Verkleidung von Stoßfängern vorgesehen ist, **dadurch gekennzeichnet, dass** er eine Anordnung nach einem der Ansprüche 1 bis 13 umfasst.
